## Europäisches Patentamt

## European Patent Office

## Office européen des brevets

(11) Publication number: **0 166 898**
**B1**

(12) **EUROPEAN PATENT SPECIFICATION**

(45) Date of publication of patent specification: **11.04.90**

(51) Int. Cl.⁵: **B 23 B 27/16**

(21) Application number: **85105045.0**

(22) Date of filing: **25.04.85**

(54) **Throw-away insert.**

(30) Priority: **07.05.84 JP 66815/84**

(43) Date of publication of application:
**08.01.86 Bulletin 86/02**

(45) Publication of the grant of the patent:
**11.04.90 Bulletin 90/15**

(84) Designated Contracting States:
**DE FR GB IT**

(56) References cited:
**EP-A-0 046 511**
**EP-A-0 084 612**
**DE-A-2 840 610**
**DE-A-3 332 821**
**GB-A-2 128 114**
**JP-U-5 733 924**

(73) Proprietor: **Sumitomo Electric Industries, Ltd.**
**5-33, Kitahama 4-chome Chuo-ku**
**Osaka (JP)**

(72) Inventor: **Maeda, Jun c/o Itami Works of**
**Sumitomo**
**Electric Industries, Ltd. 1-1 Koyakita 1-chome**
**Itami-shi Hyogo-ken (JP)**
Inventor: **Mori, Yoshikatsu c/o Itami Works of**
**Sumitomo**
**Electric Industries, Ltd. 1-1 Koyakita 1-chome**
**Itami-shi Hyogo-ken (JP)**

(74) Representative: **Patentanwälte Kirschner &**
**Grosse**
**Forstenrieder Allee 59**
**D-8000 München 71 (DE)**

Courier Press, Leamington Spa, England.

# Description

This invention relates to a throw-away insert as disclosed in JP—U—57-33924 wherein cutting edges and their sides associated with the rake surface are improved.

## Description of the Prior Art

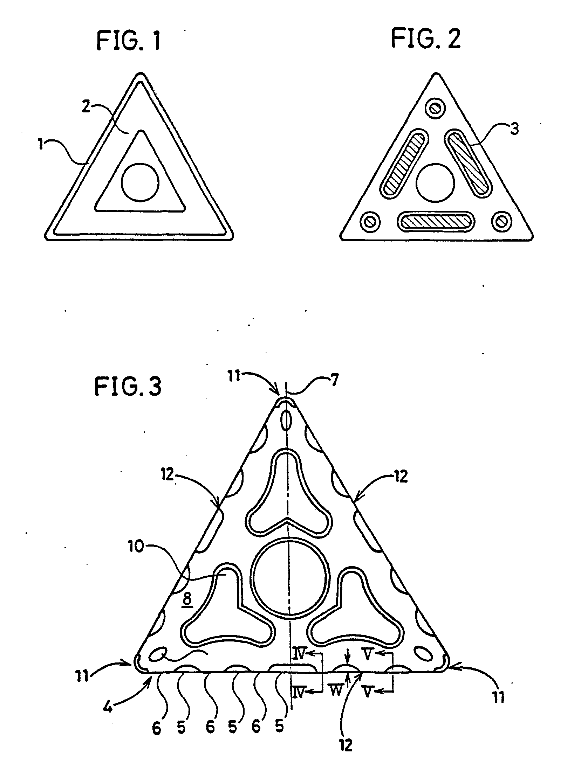

Fig. 1 is a top view of an example of a conventional throw-way insert, and this type of throw-away insert is disclosed, e.g., in U.S. Patent 3,383,748. This throw-way insert has a groove of given cross-section formed along all cutting edges, with a land 1 to given width interposed therebetween.

In the throw-way insert shown in Fig. 1, the cross-sectional shape is constant along the cutting edges, as described above. Thus, in a form of cutting, such as profile cutting, where depth of cut varies, there has been a problem that satisfactory disposal of chips is impossible. Accordingly, the use of the throw-way insert in an unmanned cutting line has encountered difficulties.

Fig. 2 is a top view of another example of a throw-way insert which has heretofore been used in profile cutting, and this type of throw-way insert is disclosed, e.g. in JP—U—57-33924. This throw-away insert has raised portions 3 disposed at suitable locations on the rake surface.

A similar state of the art is disclosed in EP—00 84 612 describing an insert being provided with a land and raised portions having a higher level than the surface of the adjacent land.

The throw-away insert shown in Fig. 2, unlike the one shown in Fig. 1, has its cross-sectional shape varied along the cutting edges. Therefore, under various cutting condition, disposed of chips can be smoothly effected. However, when the insert is clamped on a holder, the support surfaces (indicted by hatching in Fig. 2) are small, and hence, in profile cutting where depth of cut varies, there has been a problem that the insert is liable to break.

## Summary of the Invention

Accordingly, an object of this invention is to provide a throw-away insert which ensures satisfactory chip disposal and long tool life.

In a broad aspect of the invention, there is provided a throw-away insert comprising a cutting edge formed along the outer periphery and between adjacent noses of the insert, a rake surface having a concave arcuate shaped portion in a cross-section as seen at right angles to said cutting edge which portion extends from said cutting edge to the center of the insert, a plurality of raised portions formed on said rake surface so that they do not contact the cutting edges and a plurality of lands disposed along said cutting edge such that they extend from the cutting edge inwards on the rake surface and spaced at a predetermined distance from each other, characterized in that said lands are so formed that an angle formed by the tangent of the concave arcuate rake surface at the intersection of said rake surface and the respective land, and by the respective land as well as the width of the land in a direction perpendicular to the cutting edge vary such that the angle is greatest where the land has its greatest width and is decreasing as the width of the lands becomes smaller, in that said land has a flat surface which is contiguous to the cutting edge, and in that portions having lands alternate with other portions having no land along with the cutting edge.

Thus, in this invention, since portions where lands are formed alternate with other portions where no lands are formed, along the cutting edges, the chip disposal function in profile cutting is improved. Further, the strength of the throw-away insert is also increased; thus, a throw-away insert having a long life can be obtained.

The tangent angle with respect to said arc in the land may be made greater than the tangent angle at portions where no lands are formed.

Preferably, one or more lands are symmetrical with respect to a perpendicular line drawn from the insert center to a cutting edge which is formed with said lands.

More preferably, the ridges formed on the rake surface includes one or more boss portions formed around the insert center and one or more raised portions spaced a predetermined distance from a cutting edge.

These object and other objects, features, aspects and advantages of the present invention will become more apparent from the following detailed description of the present invention when taken in conjunction with the accompanying drawings.

## Brief Description of the Drawings

Fig. 1 is a top view of an example of a conventional throw-away insert;

Fig. 2 is a top view of another example of a conventional throw-away insert;

Fig. 3 is a top view of a throw-away insert according to an embodiment of this invention;

Fig. 4 is a sectional view taken along the line IV—IV in Fig. 3;

Fig. 5 is a sectonal view taken along the line V—V in Fig. 3;

Fig. 6 is a sectional view showing the principal portion of Fig. 3 on an enlarged scale;

Fig. 7 is a sectional view illustrating a chip produced by the throw-away insert of the embodiment shown in Fig. 3; and

Fig. 8 is a view showing the chip disposal effects of the throw-away insert of the embodiment shown in Fig. 3 and of a conventional throw-away insert.

## Description of the preferred Embodiments

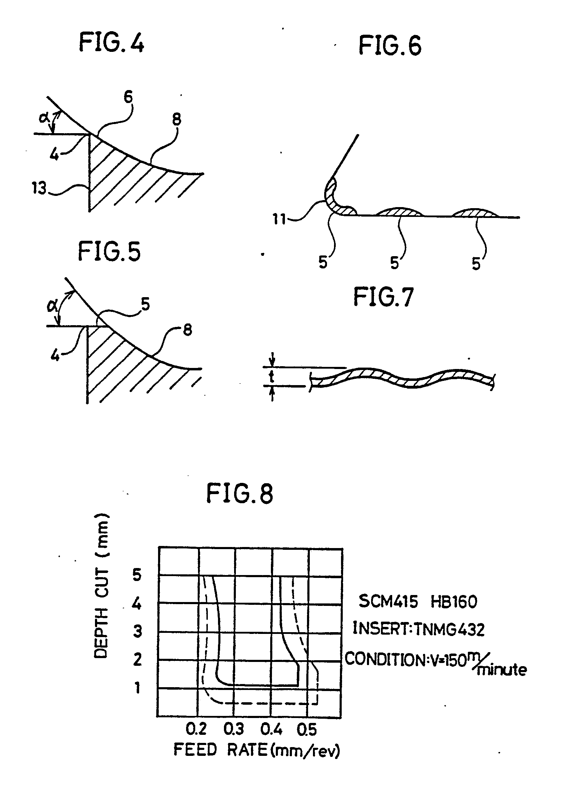

Fig. 3 is a schematic view of a throw-way insert according to an embodiment of this invention. Figs. 4 and 5 are principal sectional views showing cross-sections taken along the lines IV—IV and V—V in Fig. 3, respectively. In Fig. 3, a cutting side 4 has portions where lands 5 are formed and other portions 6 where no lands are formed, these portions being symmetrical with respect to a centerline 7. That is, the lands 5 are formed not continuously along a cutting edge 12 but at intervals. The length of the lands is preferably about 1.0—3.0 mm at the nose portions and the length of other lands 5 is also preferably within a range of 1.0—3.0 mm, these dimensions being determined according to conditions under which throw-away inserts are commonly used. For example, for a triangular insert with an inscribed circle having a diameter of 12.7 m, the length of the lands at the nose portions are suitably 2 mm long and other lands 2 mm long.

The rake surface 8, as shown in Figs. 4 and 5, is so formed that its cross-sectional shape is arcuate, and its tangent angle $\alpha$ is large where lands 5 are formed and small at portions 6 where lands are not formed. The tangent angle $\alpha$ referred to herein means an angle formed between a tangent to the intersection of the arc and land and a straight line perpendicular to the surface 13 in Fig. 4. In the portions where lands 5 are formed, the tangent angle $\alpha$ is preferably in the range of 20—30°, while in the portions 6 where lands are not formed it is preferably in the range of 10—25°. Disposed on the rake surface 8 are a projection 9 and bosses 10 in the middle (of the rake surface 8).

According to the throw-away insert arrangement in the manner described above, chips produced during cutting only come in contact with the lands 5 (hatched in Fig. 6); thus, as compared with a conventional throw-way insert with lands having a fixed width, the area of contact is small and hence cutting resistance is reduced. The results of tests using the throw-away insert of the present embodiment and the conventional throw-away insert shown in Fig. 1 indicated that the cutting force of the throw-away insert of the present embodiment was reduced by about 15%. The test conditions: workpiece material, SCM 440, $H_B$ 250; cutting speed, 150 m/min; feed rate, 0.3 mm/rev; and depth cut, 5 mm.

Fig. 7 shows the cross-section of a chip produced by the throw-away insert of the present embodiment. As shown, the chip receives great strains at locations where lands 5 are formed, and the apparent thickness $t$ is increased. As the chip hits the inclined surface of the projection 9 or boss 10, the chip can be easily broken, so that satisfactory chip disposal is attained. Fig. 8 is a graph showing chip disposal effects determined by making a comparative test of the throw-way insert of the present embodiment and the conventional throw-away insert shown in Fig. 1, wherein the solid and broken lines indicate chip disposal capability regions of the conventional and present cases, respectively. The test condition: the workpiece material, SCM 415, $H_B$ 160; and the cutting speed, 150 m/min.

In the portions where lands 5 are formed in the present embodiment, the width W of the lands 5 changes continuously within the range of 0—0.4 mm and the tangent angle is greatest where the land width is greatest and is smallest where the land width is smallest, i.e. zero. This setting makes it possible to prevent reduction in cutting edge strength where the land width is small and to maintain the sharpness of the insert even where the land width is large.

Although the present invention has been described and illustrated in detail, it is clearly understood that the same is by way of illustration and example only and is not to be taken by way of limitation, the scope of the present invention being limited only by the terms of the appended claims.

**Claims**

1. A throw-away insert comprising a cutting edge (12) formed along the outer periphery and between adjacent noses of the insert, a rake surface (8) having a concave arcuate shaped portion in a cross-section as seen at right angles to said cutting edge (12), which portion extends from said cutting edge (12) to the center of the insert, a plurality of raised portions (10) formed on said rake surface (8) so that they do not contact the cutting edges (12), and a plurality of lands (5) disposed along said cutting edge (12) such that they extend from the cutting edge inwards on the rake surface (8) and spaced at a predetermined distance from each other, characterized in that said lands (5) are so formed that an angle ($\alpha$) formed by the tangent of the concave arcuate rake surface (8) at the intersection of said rake surface (8) and the respective land (5), and by the respective land (5) as well as the width of the land (5) in a direction perpendicular to the cutting edge (12) vary such that the angle ($\alpha$) is greatest where the land (5) has its greatest width and is decreasing as the width of the land (5) becomes smaller, in that said land (5) has a flat surface which is contiguous to the cutting edge (12), and in that portions having lands (5) alternate with other portions (6) having no land along with the cutting edge (12).

2. A throw-away insert as set forth in claim 1, wherein said plurality of raised portions (10) include a plurality of bosses whose upper surfaces are substantially flat, disposed around the center of the insert, and one or more projections (9) spaced a desired distance away from said cutting edge.

3. A throw-away insert as set forth in one of claims 1 to 2, wherein said plurality of lands (5) are disposed symmetrical with respect to a perpendicular line drawn from the insert center to the cutting edge (12) where said lands (5) are formed.

**Patentansprüche**

1. Wendeschneidplatte, umfassend eine Schneidkante (12), die längs des äußeren Umfanges und zwischen benachbarten Nasen der Platte ausgebildet ist eine Spanfläche (8), die einen im Schnitt im rechten Winkel zur Schneidkante (12) gesehen konkaven bogenförmig gestalteten Abschnitt aufweist, der sich von der Schneidkante (12) zur Mitte der Platte erstreckt, eine Vielzahl von erhabenen Abschnitten (10), die auf der Spanfläche so angeordnet, sind, daß sie mit den Schneidkanten (12) nicht in Berührung kommen, und eine Vielzahl von Nuten (5), die längs der Schneidkante (12) dergestalt angeordnet sind, daß sie sich von der Schneidkante nach innen auf die Spanfläche (8) erstrecken und ein einem bestimmten Abstand zueinander angeordnet sind, dadurch gekennzeichnet, daß die Nuten (5) so ausgebildet sind, daß ein Winkel (α), der zwischen der Tangente an die konkave bogenförmige Spanfläche (8) im Schnittpunkt der Spanfläche (8) mit der jeweiligen Nut (5), und der Nut (5) sowie der Breite der Nut (5) in einer Richtung senkrecht zur Schniedkante (12) gebildet wird, so variiert, daß der Winkel (α) dort am größten ist, wo die Nut (5) ihre größte Breite aufweist und in dem Maße abnimmt, wie die Breite der Nut (5) abnimmt, daß die Nut (5) eine ebene Oberfläche aufweist, die an die Schneidkante (12) anstößt, und daß die Abschnitte, welche Nuten (5) aufweisen, sich mit anderen Abschnitten (6) absechseln, die keine Nut (5) an der Schneidkante (12) aufweisen.

2. Wendschneidplatte nach Anspruch 1, wobei die Vielzahl von erhabenen Abschnitten eine Vielzahl von Vorsprüngen (10) umfaßt, deren Oberflächen im wesentlichen eben sind und die un den Mittelpunkt der Platte herum angeordnet sind, sowie einen oder mehrere Vorsprüngs (9), die in einem gewünschten Abstand zur Schneidkante angeordnet sind..

3. Wendschneidplatte nach Anspruch 1 oder 2, wobei die Vielzahl von Nuten (5) symmetrisch bezüglich einer von dem Mittelpunkt der Platte senkricht zur Schneidkante (12), an der die Nuten (5) ausgebildet sind, gezogenen Linie angeordnet ist.

**Revendications**

1. Plaquette de coupe à jeter coprenant un bord de coupe (12) formé le long de la périphérie extérieure et entre les talons contigus de la plaquette, une surface de coupe (8) présentant une portion de configuration arqué concave en coupe transversale vue à angle droit par rapport à ce bord de coupe (12), laquelle portion s'étend à partir du bord de coupe (12) vers le centre de la plaquette, plusieurs portions en relief (10) formées sur cette surface de coupe (8) de sorte qu'elles ne sont pas en contact avec le bord de coupe (12) et plusieurs listels (5) disposés le long de ce bord de coupe (12) de sorte qu'ils s'étendent à partir du bord de coupe vers l'intérieur sur la surface de coupe (8) et espacés à une distance prédéterminée entre eux, caractérisée en ce que, ces listels (5) sont formés de telle manière qu'un angle (α) formé par la tangente de la surface de coupe arquée concave à l'intersection de cette surface de coupe (8) et du listel respectif (5), et par le listel respectif (5) ainsi que par le largeur du listel (5) dans une direction perpendiculaire au bord de coupe (12) varie de telle manière que l'angle (α) est plus grand à l'endroit où le listel (5) présente la plus grande largeur et décroît à mesure que la largeur du listel (5) diminue, en ce que ce listel (5) présente un surface plate qui est contigué à la surface de coupe (12) et en ce que des portions présentant des listels (5) alternent avec d'autres portions (6) ne présentant pas de listel le long du bord de coupe (12).

2. Plaquette de coupe à jeter selon la revendication 1, dans laquelle les portions reliées (10) comprennent plusieurs bossages dont les surfaces supérieures sont sensiblement planes, disposées autour du centre de la plaquette, et une ou plusieurs saillies (9) espacées à une distance souhaitée en éloignement du bord de coupe.

3. Plaquette de coupe à jeter selon la revendication 1 ou 2, dans laquelle les listels (5) sont disposés symétriquement par rapport à une ligne perpendiculaire tirée à partir du centre de la plaquette jusqu'au bord de coupe (12) où sont formés les listels (5).

FIG. 1

FIG. 2

FIG.3

# FIG. 4

# FIG.5

# FIG.6

# FIG.7

# FIG.8

SCM415  HB160

INSERT:TNMG432

CONDITION:V=150$^m$/minute

FEED RATE(mm/rev)

DEPTH CUT ( mm )